(19) Europäisches Patentamt
European Patent Office
Office européen des brevets

(11) **EP 2 818 271 A1**

(12) **EUROPEAN PATENT APPLICATION**

(43) Date of publication:
**31.12.2014 Bulletin 2015/01**

(51) Int Cl.:
*B23K 26/02* (2014.01)      *B23K 26/38* (2014.01)
*B23K 26/08* (2014.01)      *B23K 37/04* (2006.01)
*B23K 37/02* (2006.01)

(21) Application number: **14425077.6**

(22) Date of filing: **18.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.06.2013 IT VI20130160**

(71) Applicant: **Procon S.r.l.**
**36015 Schio (VI) (IT)**

(72) Inventor: **Battheu, Johan**
**36015 Schio (VI) (IT)**

(74) Representative: **Santi, Filippo et al**
**Barzanò & Zanardo Roma S.p.A.**
**Via Piemonte 26**
**00187 Roma (IT)**

(54) **Laser cutting system and laser cutting machine**

(57)    The present invention relates to a cutting system for high precision cutting of substantially flat elements (1, 11), comprising a support plane (40) for said substantially flat elements (1, 11), a first axle (Xa) of motion and a second axle (Ya) of motion, perpendicular to the first axle (Xa) and parallel to the support plane (40), and a support (7) for a cutting device, placeable along such axles; the support plane (40) is moveable, independently from the support (7), along a third axle (Xw) of movement, parallel to the first axle (Xa), so as the relative movement of the support (7) in respect with the support plane (40) results in a first component corresponding to the sum of the movements along the first axle (Xa) and the third axle (Xw), and in a second component corresponding to the sum of the movements along the second axle (Ya).

Fig. 1

## Description

The present invention is in the field of the laser cutting machines, in particular the invention relates to a laser cutting system and a laser cutting machine for metal sheets or for sheets from metal coils.

In detail, the invention relates to a laser cutting machine.

The most common laser cutting machine for metal sheets is the one equipped with moving cutting device and not moving workpiece (i.e. a metal sheet).

In such a kind of machine, the metal sheet workpiece is fixed on a plane, while the cutting device, which is a laser cutting head, moves by means of a device for moving on the sheet plane and along two axles X, Y perpendicular each other.

The cutting device thus is controlled by a CNC system, while the sheet is fixed to the machine.

The laser cutting operations consist of small and fast very high precision movements, requiring thus a minimized resulting inertia force in the moving elements.

Each movement due to the inertia force, in fact, may cause inaccuracies in the cut made by the machines, which should thus provide a certain machining tolerance.

The cutting device is placed on a moving device quite heavy, which thus accentuates the problem of the developed inertia force.

Known solutions to such problem provide further movement axles, so as to reduce the inertia force problem.

For example, a known solution is the one disclosed in the patent EP1366846, which discloses linear movements along an axle X by means of an auxiliary axis x, so as to develop an inertia force lower than the one developed in the conventional machines and thus to obtain a higher precision.

A second solution is shown in the document US2008/0197118, wherein a system equipped with two auxiliary axles is disclosed, perpendicular each other and parallel to the axles X and Y of the traditional machines.

An other known solution is shown in the document EP2283963, wherein a traditional system is disclosed, but it is further equipped with an auxiliary movement axle parallel to the axle Y, which allows, by means of a connection by means of a connecting rod, providing a movement of the cutting device along any axle y perpendicular to the axle X.

All these systems described until now however develop a certain inertia force, due to the movements of the cutting device along the different axles X, x, Y, y. Aim of the present invention is realizing a laser cutting system which develops an even lower inertia force, so as to guarantee a greater precision in the movements with respect to the known machines. Advantageously, the invention provides a cutting system, for cutting substantially flat elements, comprising a support plane for such elements, a first movement axle and a second movement axle, perpendicular to the first and parallel to the support plane;

the system further comprises a support for a cutting device, moveable and placeable along such axles, while the support plane is moveable, independently from the support, along a third movement axle, parallel to the first axle, so as the relative movement of the support, in respect with the support plane, results in a first component, corresponding to the sum of the movements along the first and the third axle, and in a second component, corresponding to the sum of the movements along the second axle.

This in fact allows reducing the inertia force, since the same is divided in at least three movements. Furthermore, according to the invention, the cutting unit comprising the support for the cutting device comprises also two sliding blocks which can move along a same axle parallel to the second axle at a variable distance from each other, and two rods linked each other at a first respective end, and to a respective sliding block at a second end; the support is linked to one of such first ends of the rods.

This advantageously allows controlling the inertia force developed in the movements along the first axle, since the oblique rods decompose their movement along their two orthogonal components.

Always according to the invention, one of said rods is comprised in an articulated quadrilateral, so as to advantageously control rotation of the support of the cutting device in respect with the movement axles. Preferably, according to the invention, the articulated quadrilateral is an articulated parallelogram, so as the support of the cutting device advantageously does not rotate in respect with the movement axles.

Also, according to the invention, the cutting device is a laser cutting device.

Advantageously, the invention provides also realizing a cutting machine comprising a cutting system as it is described in the present application.

In particular, the cutting machine of the invention provides, in correspondence of the support plane of the cutting system, a frame equipped with grasping means, moveable along a linear guide parallel to the third axle; the grasping means are suitable for firmly couple to the workpieces, so as advantageously such elements are moveable along the third axle, reducing the developed inertia force and accordingly increasing the accuracy of the machine.

This advantage, as well as these and other objects which will become apparent hereinafter are achieved by a laser cutting system and a laser cutting machine according to the appended independent claims, to which reference is made in full.

Features of detail of the laser cutting system and the corresponding machine according to the invention are set forth in the dependent claims, to which here reference is made in full.

Further characteristics and advantages of the invention will become apparent from the description of a preferred, but not exclusive embodiment of the laser cutting system and of the relative machine according to the invention, illustrated by way of indicative and non-limiting, with the aid of the drawings attachments, wherein:

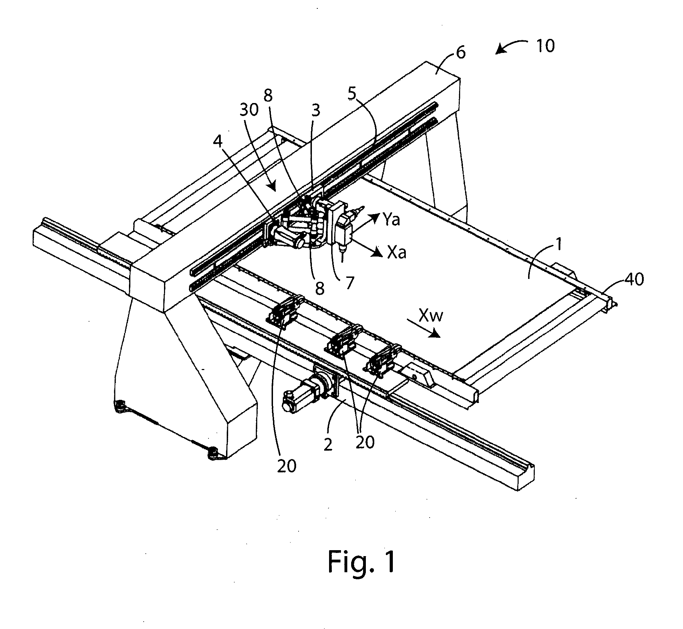

Figure 1 shows an axonometric view of the machine of the invention during the machining of a metal sheet;

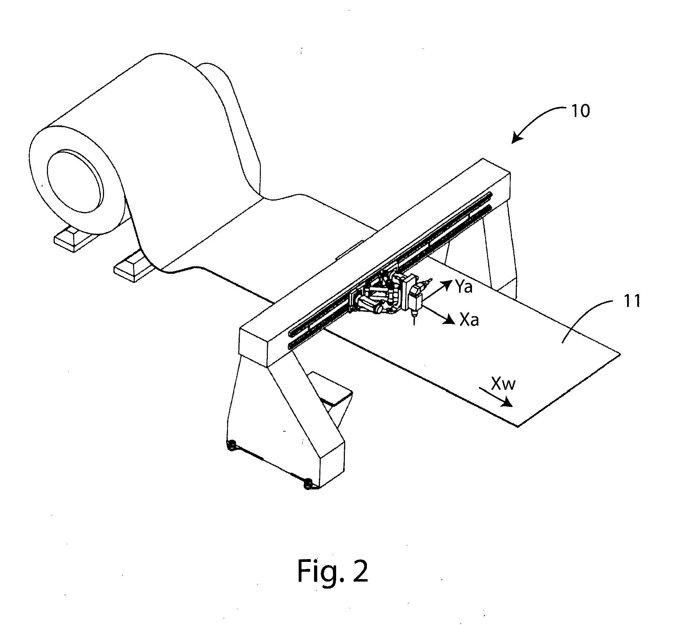

Figure 2 shows an axonometric view of the machine of the invention during the machining of a sheet from a metallic coil;
Figure 3 shows a top view of the machine of figure 1;
Figure 4 shows a detail of the system of the invention applied to the machine of figure 1.

Referring to the attached figures, the invention provides a machine 10 for laser cutting a metal sheet 1, or a sheet 11 from a metallic coil, moveable along the axle Xw. Such movement of the metal sheet 1 or of the sheet 11 from a metallic coil occurs by means of a linear guide 2, which accompanies and guides grasping means 20 which in turn grasp the sheet 1 or the sheet 11, firmly coupling to it.

The guide 2 is placed at a side of the work area on which the sheet 1 or the sheet 11 is placeable, so as to not hamper the other movements.

Naturally, however, a guide may be placeable also below such work area, or in other positions.

The grasping means 20, being moveable along the guides 2, make the sheet 1 or the sheet 11 moveable according to the axle Xw.

The machine 10 comprises also a cutting unit 30, comprising due sliding blocks 3, 4 moveable along a guide 5, placed on a support 6 overlying the sheet 1 or the sheet 11. The two sliding blocks 3, 4 are moveable independently one from the other and both linked to the support for the cutting head 7, by means of respective linking rods 8.

The support for the cutting head 7, thus, is moveable along two axles Xa and Ya, perpendicular each other and parallel to the plane 40 on which the sheet 1 or the sheet 11 is placed and is moveable.

The guide 5, in particular, is overlying the plane 40 and is parallel to the axle Ya, while the guide 2 is parallel to the axle Xa, so as the sheet or the sheet may move along the abovementioned axle Xw, parallel to the axle Xa.

Naturally, especially in case of working the coil, it is not necessary the guide 2 is present, but it is enough a guiding device is present, properly guiding (i.e. according to the axle Xw) the metal sheet from the coil.

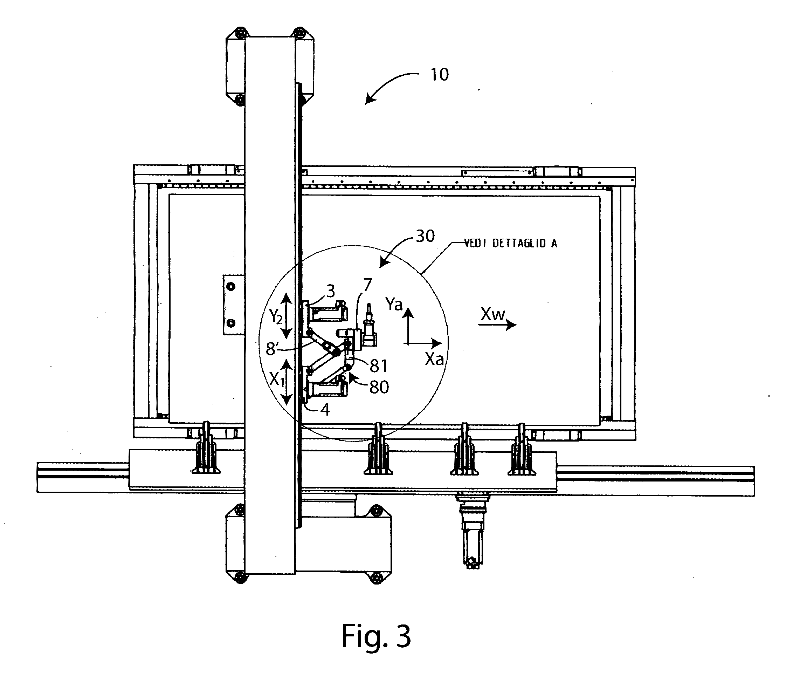

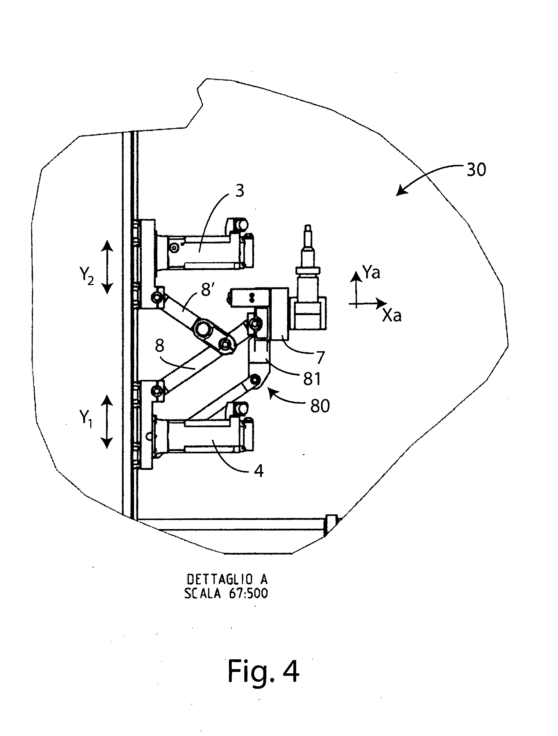

Observing now in detail the figure 3 and 4, they show the cutting unit 30, wherein a first sliding block 4 provides a first linking rod 8, comprising an articulated quadrilateral 80, more precisely an articulated parallelogram, and a second sliding block 3 provides a second linking rod 8', linked by means of hinge to the first linking rod 8.

For articulated parallelogram 80 a system, equipped with a first rod 81, with a second and third rod 82 and 83, fixed by means of hinges to the first sliding block 4 and to the first rod 81 so as resulting parallel each other, is meant. Since the hinges, which fix the end of the second and third rod 82 and 83 to the first sliding block 4 and to the first rod 81, allow that the first and the second rod rotate in respect with the first sliding block and to the first rod, the latter remain parallel to each other, while the distance between the first sliding block 4 and the first rod 81 may vary, making the support for the cutting head 7 move along the axle Xa.

In this way, after a movement of the first sliding block 4 along the direction Y1, and/or of the second sliding block 3 along the direction Y2, the support for the cutting head 7 moves along the axle Ya (i.e. parallel to the directions Y1 and Y2) and/or along the axle Xa (i.e. because of a relative movement between the first sliding block 4 and the second sliding block 3, which generates a movement of the linking rods 8 and 8').

In other words, a combination of the movements of the sliding blocks 3, 4 results in a movement of the support of the cutting head 7 along the directions Xa and Ya, according to a mathematical algorithm $(Xa, Ya) = f(Y1, Y2)$.

Such movements generate an inertia force very lower than the one developed in the known system and thus advantageously may be carried out also at very high speeds, i.e. higher than the speeds that were until now allowed for an equal accuracy.

Furthermore, the resulting movement along the direction X is defined by the movement of the metal sheet 1 or by the sheet 11 of the coil, along the direction Xw, and by the movement of the support of the cutting head 7 along the direction Xa, which occur simultaneously. Thus the relative movement of the support of the cutting head 7 in respect with the sheet 1 or with the sheet 11 of the coil results from:

$$Y=Ya$$

$$X=Xa+Xw.$$

The invention so conceived is susceptible of numerous modifications and variations, all falling within the scope of protection of the appended claims. Furthermore, all the details may be replaced by other elements technically equivalent.

In practice, the elements used, as well as the shapes and the contingent dimensions, may be varied depending on the contingent requirements and the state of the technique.

Where the structural characteristics and the techniques mentioned in the following claims are followed by reference numbers or signs, such signs or reference numbers have been affixed with the only aim of increasing the intelligibility of the claims themselves and, accordingly, they are not in any way limiting the interpretation of each element identified by way of example only, by such signs or reference numbers.

**Claims**

1. Cutting system for high precision cutting of substantially flat elements (1, 11), comprising a support plane (40) for said substantially flat elements (1, 11), a first axle (Xa) of motion and a second axle (Ya) of motion, perpendicular to the first axle (Xa) and parallel to the support plane (40), and a support (7) for a cutting device, displaceable along said axles, said cutting system being **characterized in that** the support plane (40) can move, independently of the support (7) for a cutting device, along a third axles (Xw) of motion, parallel to the first axle (Xa), so that the movement of the support (7) for a cutting device in respect with the support plane (40) results in a first component corresponding to the sum of the movements along the first axle (Xa) and the third axle (Xw), and in a second component corresponding to the sum of the movements along the second axle (Ya).

2. Cutting system according to the claim 1, **characterized in** providing a cutting unit (30), comprising a support (7) for a cutting device, two sliding blocks (3, 4) moveable along a same axle (Y1, Y2), parallel to the second axle (Ya), at a variable distance from each other, and two rods (8, 8') linked to each other at a first respective end, and to a respective sliding block (3, 4) at a second end, the support (7) for a cutting device being linked to one of said first ends of the rods (8, 8').

3. Cutting system according to the claim 2, **characterized in that** one of said rods is comprised in an articulated quadrilateral (80).

4. Cutting system according to the claim 3, **characterized in that** the articulated quadrilateral is an articulated parallelogram (80).

5. Cutting system according to one of the claims 1-4, **characterized in that** the cutting device is a laser cutting device.

6. Cutting machine comprising a cutting system according to one of the claims 1-5.

7. Cutting machine according to the claim 6, **characterized in** providing, in correspondence of the support plane (40), a frame equipped with grasping means (20) moveable along a linear guide (2) parallel to the third axle (Xw), the grasping means (20) being suitable for firmly couple with said substantially flat elements (1, 11), so that the substantially flat elements (1, 11) are moveable along said third axle (Xw).

Fig. 1

Fig. 2

Fig. 3

EP 2 818 271 A1

DETTAGLIO A
SCALA 67:500

Fig. 4

**Europäisches Patentamt**
**European Patent Office**
**Office européen des brevets**

# EUROPEAN SEARCH REPORT

Application Number

EP 14 42 5077

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 166 949 A2 (PRIMA IND SPA [IT]) 2 January 2002 (2002-01-02) | 1,5-7 | INV. B23K26/02 |
| Y | * paragraph [0008] - paragraph [0017]; figures 1-3 * | 2-4 | B23K26/38 B23K26/08 B23K37/04 |
| X | WO 2009/105608 A1 (AUTOMATIC FEED COMPANY [US]; BECK KIM [US]; MCMURTRIE KURT [US]; MARAN) 27 August 2009 (2009-08-27) * paragraph [0011] - paragraph [0037]; figures 1-3 * | 1,5-7 | B23K37/02 |
| X | US 2013/098876 A1 (KOBAYASHI TAKUO [JP] ET AL) 25 April 2013 (2013-04-25) * paragraph [0018] - paragraph [0033]; figures 1,3 * | 1,5-7 | |
| X | DE 10 2007 023017 A1 (THYSSENKRUPP DRAUZ NOTHELFER [DE] THYSSENKRUPP LASERTECHNIK GMBH [DE]) 20 November 2008 (2008-11-20) * paragraph [0022] - paragraph [0031]; figures 3,4 * | 1,5,6 | |
| X | US 5 854 460 A (GRAF RAYMOND J [US] ET AL) 29 December 1998 (1998-12-29) * column 3, line 24 - line 65; figures 1,3,4 * | 1,5,6 | **TECHNICAL FIELDS SEARCHED (IPC)** B23K |
| X | WO 2012/057025 A1 (AMADA CO LTD) 3 May 2012 (2012-05-03) * abstract; figures 1,4 * | 1,5,6 | |
| Y | EP 2 283 963 A1 (SALVAGNINI ITALIA SPA [IT]) 16 February 2011 (2011-02-16) * the whole document * | 2-4 | |

The present search report has been drawn up for all claims

| Place of search | Date of completion of the search | Examiner |
|---|---|---|
| Munich | 15 October 2014 | Möller, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 42 5077

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2014

| Patent document cited in search report | | Publication date | Patent family member(s) | | | Publication date |
|---|---|---|---|---|---|---|
| EP 1166949 | A2 | 02-01-2002 | AT | 273104 | T | 15-08-2004 |
| | | | CA | 2351510 | A1 | 30-12-2001 |
| | | | DE | 60104775 | D1 | 16-09-2004 |
| | | | DE | 60104775 | T2 | 01-09-2005 |
| | | | EP | 1166949 | A2 | 02-01-2002 |
| | | | IT | TO20000648 | A1 | 31-12-2001 |
| | | | JP | 2002059280 | A | 26-02-2002 |
| | | | US | 2002000429 | A1 | 03-01-2002 |
| WO 2009105608 | A1 | 27-08-2009 | CN | 102105256 | A | 22-06-2011 |
| | | | EP | 2285521 | A1 | 23-02-2011 |
| | | | JP | 2011512259 | A | 21-04-2011 |
| | | | US | 2009212033 | A1 | 27-08-2009 |
| | | | WO | 2009105608 | A1 | 27-08-2009 |
| US 2013098876 | A1 | 25-04-2013 | CN | 103056528 | A | 24-04-2013 |
| | | | JP | 2013086144 | A | 13-05-2013 |
| | | | US | 2013098876 | A1 | 25-04-2013 |
| DE 102007023017 | A1 | 20-11-2008 | AT | 554876 | T | 15-05-2012 |
| | | | DE | 102007023017 | A1 | 20-11-2008 |
| | | | EP | 2144729 | A1 | 20-01-2010 |
| | | | US | 2010140234 | A1 | 10-06-2010 |
| | | | WO | 2008138973 | A1 | 20-11-2008 |
| US 5854460 | A | 29-12-1998 | NONE | | | |
| WO 2012057025 | A1 | 03-05-2012 | CN | 103228398 | A | 31-07-2013 |
| | | | EP | 2633941 | A1 | 04-09-2013 |
| | | | JP | 2012091180 | A | 17-05-2012 |
| | | | KR | 20130047768 | A | 08-05-2013 |
| | | | TW | 201223675 | A | 16-06-2012 |
| | | | US | 2013193125 | A1 | 01-08-2013 |
| | | | WO | 2012057025 | A1 | 03-05-2012 |
| EP 2283963 | A1 | 16-02-2011 | BR | PI1002699 | A2 | 03-04-2012 |
| | | | CA | 2708923 | A1 | 27-01-2011 |
| | | | CN | 101890577 | A | 24-11-2010 |
| | | | EP | 2283963 | A1 | 16-02-2011 |
| | | | JP | 2011025315 | A | 10-02-2011 |
| | | | KR | 20110011544 | A | 08-02-2011 |
| | | | RU | 2010131207 | A | 10-02-2012 |
| | | | US | 2011017714 | A1 | 27-01-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1366846 A
- US 20080197118 A
- EP 2283963 A